# EUROPÄISCHE PATENTANMELDUNG

(11) **EP 3 236 152 A1**
(43) Veröffentlichungstag der Anmeldung: **25.10.2017**
(21) Anmeldenummer: 17000511.0
(22) Anmeldetag: 28.03.2017
(51) Int. Cl.: F23C 15/00, F23C 99/00, F23L 13/00, F23N 3/00

(54) **VERFAHREN UND VORRICHTUNG ZUR THERMISCHEN MATERIALBEHANDLUNG IN EINEM SCHWINGFEUER-REAKTOR**

(30) Priorität: 22.04.2016 DE 102016004977
(71) Anmelder: Büchner, Horst, 98617 Meiningen (DE)
(72) Erfinder: Büchner, Horst, 98617 Meiningen (DE)
(74) Vertreter: Petersen, Frank

(57) **Zusammenfassung**

Die Erfindung betrifft eine Vorrichtung und ein Verfahren zur thermischen Behandlung eines Rohstoffes in einem schwingenden Heißgasstrom (12) eines Schwingfeuerreaktors, mit einem Brenner (1), der über wenigstens eine Leitung ein Massenstrom (10) zur Bildung wenigstens einer Flamme (11) zugeführt wird, die den schwingenden Heißgasstrom (12) erzeugt, wobei die Flamme (11) in einer Brennkammer (13) angeordnet ist und wobei sich ein Reaktionsraum (16) stromab an die Brennkammer (13) anschließt. Damit man von den Abmessung der Vorrichtung unabhängig ist, wird vorgeschlagen, den der Flamme zugeführten Massenstrom mit einer extern aufgeprägten Pulsation zu versehen. Die Brennkammer und/oder der Reaktionsraum können dann zur Vermeidung von Resonanzen in der Geometrie veränderbar sein.

## Beschreibung

Die Erfindung betrifft eine Vorrichtung sowie ein Verfahren zur thermischen Behandlung eines Rohstoffes in einem schwingenden Heißgasstrom eines Schwingfeuerreaktors, mit einem Brenner, dem über wenigstens eine Leitung ein Massenstrom aus Brenngas und Luft zur Bildung wenigstens einer Flamme zugeführt wird, die den Heißgasstrom erzeugt, wobei die Flamme in einer Brennkammer angeordnet ist und wobei sich ein Reaktionsraum stromab an die Brennkammer anschließt.

Unter einer thermischen Behandlung wird im Rahmen dieser Erfindung sowohl eine thermische Materialbehandlung als auch eine thermische Materialsynthese verstanden, wobei diese beispielsweise die Trocknung, die Kalzinierung, eine Kristallumwandlung etc. umfassen können. Des Weiteren wird im Rahmen dieser Erfindung der Begriff Rohstoff verwandt sowohl für einen einheitlichen Rohstoff als auch für ein Rohstoffgemisch, Der Rohstoff oder aber auch das Rohstoffgemisch können dabei in fester, flüssiger, gas- oder dampfförmiger Form vorliegen.

Der Rohstoff wird in den von der Flamme erzeugten Heißgasstrom eingebracht und nach seiner Behandlung als Produkt wieder aus diesem abgeschieden, beispielsweise in einem Zyklon, einem Heißgasfilter o.ä.

Grundsätzlich ist davon auszugehen, dass die weitaus größte Zahl aller technischen oder industriellen Feuerungsanlagen und Verbrennungssysteme so ausgelegt und auch so betrieben werden, dass der Verbrennungsprozess in der Flamme im Mittel zeitlich-konstant abläuft, abgesehen von geringen turbulenten Schwankungen, deren Größe mindestens eine Größenordnung kleiner ist als die mittleren Größen des Verbrennungsprozesses, wie z.B. die mittlere Strömungsgeschwindigkeit, die mittlere Temperatur der Flamme oder der Abgasströmung, der mittlere statische Druck in der Brennkammer, etc. Dies bedeutet, dass der Umsatz des eingesetzten Brennstoffes zeitlich kontinuierlich erfolgt und - als Folge hiervon - auch die Wärmefreisetzung aus dem Verbrennungsprozess sowie der Massenstrom an anfallendem Abgas (Verbrennungsprodukte) für eine feste Brennereinstellung zeitlich konstante Werte aufweisen.

Abweichend hiervon treten mitunter Phänomene bzw. "Abnormitäten" auf, die in der Literatur als Brennkammerschwingungen, selbsterregte Verbrennungsinstabilitäten oder thermo-akustische Schwingungen bezeichnet werden. Diese sind dadurch gekennzeichnet, dass der zunächst stationäre (d.h. zeitlich-konstante) Verbrennungsprozess beim Erreichen einer Stabilitätsgrenze plötzlich selbsttätig umschlägt in einen selbsterregten, zeitlich-periodischen, schwingenden Verbrennungsprozess, dessen Zeitfunktion in guter Näherung als sinusförmig bezeichnet werden kann.

Einhergehend mit dieser Änderung werden auch die Wärmefreisetzungsrate(n) der Flamme(n) und somit die thermische Feuerungsleistung der Verbrennungsanlage sowie die Abgasströmung in und aus der Brennkammer sowie der statische Druck in der Brennkammer selbst periodisch-instationär, d.h. schwingend /1, 2/.

Das Auftreten dieser Verbrennungsinstabilitäten bewirkt oftmals ein gegenüber dem stationären Betrieb der Feuerung verändertes Schadstoff-Emissionsverhalten und verursacht neben einer erhöhten Lärmbelastung der Anlagenumgebung auch eine deutlich erhöhte mechanische und/oder thermische Belastung der Anlagenstruktur (z.B. Brennkammerwände, Brennkammerauskleidung, etc.), die bis zur Zerstörung der Feuerung bzw. einzelner Komponenten führen kann. Es ist daher leicht einzusehen, dass das unerwünschte Auftreten der oben beschriebenen Phänomene in Feuerungen, die für einen zeitlich-konstanten Verbrennungsprozess ausgelegt sind, bei dem der statische Druck in der Brennkammer oder in vor- bzw. nachgeschalteten Anlagenkomponenten ebenfalls konstante Werte besitzen soll (Gleichdruck-Verbrennung), zwingend vermieden werden muss.

Ganz anders stellt sich die Situation bei einer kleinen Anzahl von sehr speziellen feuerungstechnischen Anlagen dar, bei denen das oben dargestellte Phänomen selbsterregter, periodischer Verbrennungsinstabilitäten beabsichtigt ist und dazu genutzt wird, einen periodischen Verbrennungsprozess mit periodischer Wärmefreisetzungsrate der Flamme und periodischer, schwingender Abgasströmung (pulsierende Heißgasströmung) in der Brennkammer und in nachgeschalteten Anlagenkomponenten (z.B. Wärmetauscher, chemische Reaktoren, etc.) zu erzeugen.

Seit mehr als vierzig Jahren wird in der einschlägigen Patentliteratur von chemischen Reaktoren berichtet, in denen eine thermische Behandlung eines aufgegebenen Rohstoffes (Eduktes) oder eine thermisch gesteuerte Materialsynthese aus einem oder mehreren Rohstoffen erfolgt und die typischerweise als Schwingfeuerreaktoren, pulse dryer, pulse combustor oder Pulsationsreaktoren bezeichnet werden /3, 4, 5, 6/.

All diesen Reaktoren ist gemeinsam, dass die thermische Materialbehandlung in einem pulsierenden, schwingenden Heißgasstrom - also zeitlich periodisch-instationär - erfolgt, wobei sowohl die für die thermische Materialbehandlung/Materialsynthese erforderliche Wärme als auch die mechanische Schwingungsenergie der pulsierenden Heißgasströmung aus einem instationären, schwingenden Verbrennungsprozess eines Brennstoffes wie insbesondere Erdgas, Wasserstoff, Flüssigbrennstoffe, etc. herrühren.

Der Vorteil dieser Anlagen gegenüber konventionellen, stationär arbeitenden Verbrennungssystemen besteht in der im zeitlichen Mittel periodisch-instationären und turbulenten Abgasströmung in der Brennkammer oder in nachgeschalteten Komponenten (z.B. Wärmetauscher, Reaktionsräume, Resonanzrohr, etc.).

Sowohl gegenüber festen Wänden (Brennkammerwand, Wand eines Wärmetauschers, Dampferzeuger, etc.) als auch gegenüber Material, das zur Behandlung in die Heißgasströmung mit definierter Behandlungstemperatur eingebracht wird, steigt der Wärmeübergang vom Heißgas auf Wände oder Material deutlich um das 2 bis 5-Fache gegenüber einer im Mittel stationären, turbulenten Strömung gleicher mittlerer Strömungsgeschwindigkeit und gleicher Temperatur. Deshalb erfährt zu behandelndes Material in pulsierenden Heißgasströmungen hohe Aufheizgradienten ("Thermoschockbehandlung" /6/).

Aufgrund der Analogie zwischen konvektivem Wärmetransport und dem Stoffübergang gilt obige Aussage auch für den Stoffübergang: Im Falle der periodisch-instationären, schwingenden Strömung steigt die Übergangsrate gas- oder dampfförmiger Stoffe aus dem Heißgas an das zu behandelnde Material oder vom Material in die Heißgasströmung um ähnliche Werte an, wegen dem nahezu vollständigen Fehlen von Grenzschichten, die bei stationären Strömungen bekannter Weise entstehen und Diffusions- bzw. Übergangswiderstände darstellen.

Die im Stand der Technik beschriebenen Reaktoren /6, 7, 8, 9/ bestehen typischerweise aus einer Brennkammer, in der der Reaktionsumsatz des eingesetzten Brennstoffes unter Freisetzung der chemisch darin gebundenen Wärme in einer Flamme oder flammlos erfolgt, sowie einem in Strömungsrichtung daran anschließenden Reaktionsraum, der häufig als "Resonanzrohr" bezeichnet wird, in den der Rohstoff zugegeben wird und in dem die thermische Materialbehandlung erfolgt. In einigen, besonderen Ausführungen wird der Rohstoff bereits in die Brennkammer aufgegeben.

Auf einen wesentlichen Nachteil der Schwingfeuerreaktoren zur thermischen Materialbehandlung/thermischen Materialsynthese nach dem Stand der Technik trifft man im Rahmen einer Material-Neuentwicklung.

Um sicherzustellen, dass die im Rahmen einer solchen Material-Neuentwicklung durch die thermische Materialbehandlung in einem Schwingfeuer-Reaktor erzielten Produkteigenschaften bei der Übertragung aus dem Entwicklungsstadium in das Produktionsstadium qualitativ und quantitativ erhalten bleiben - also insbesondere bei einer Massenproduktion eines Produktes in einer üblichen Produktionsanlage - ist es nach dem heutigen Stand der Technik zwingend erforderlich, die Materialentwicklung bei derselben Reaktorgröße vorzunehmen, mit der später die Massenfertigung des fertig entwickelten Produktes erfolgen soll.

Ein bei technischen Anlagen normalerweise möglicher "Upscale" um den Faktor 1 : 10 bis 1 : 50 bei einem Übergang von einer Musterfertigung während der Entwicklung mit einem Laborreaktor zu einer Massenfertigung in einem Produktions-(Groß-)Reaktor unter sicherer Beibehaltung der erzielten Entwicklungserfolge (Materialeigenschaften des neuen Produkts) sind derzeit mit den beschriebenen Schwingfeuerreaktoren technisch nicht möglich.

Im Folgenden wird die physikalische Ursache erläutert für dieses unter verschiedensten Gesichtspunkten unerwünschte Fehlen der Skalierbarkeit von Reaktoren, die sich im Hinblick auf sich unerwünscht ändernde Materialeigenschaften bei der Herstellung von Produkten in Schwingfeuerreaktoren unterschiedlicher Größe (unterschiedliche Anlagenkapazitäten) und in vergleichbarer Weise auch bei unterschiedlicher Bauform von Reaktoren auswirkt:
Geht man von der wünschenswerten Situation aus, es gäbe einerseits eine Kleinausführung eines Schwingfeuerreaktors zur thermischen Materialbehandlung, also einen "Laborreaktor", der bei der Materialentwicklung eingesetzt werden könnte im Rahmen einer Mustermengenfertigung, beispielsweise mit einer Durchsatzrate von 10 kg Produkt pro Stunde, und es gäbe andererseits eine entsprechende Großausführung eines solchen Reaktors für die Massenproduktion desselben Produkts, beispielsweise mit einer Durchsatzrate von 150 kg pro Stunde.

Selbst unter der Voraussetzung, dass sowohl die Temperatur des Heißgases, in das der Rohstoff in den beiden Reaktoren jeweils aufgegeben wird, also die Materialbehandlungstemperatur, als auch die Verweilzeit, die der Rohstoff der Heißgasströmung ausgesetzt wird, also die Materialbehandlungsdauer, in beiden Reaktoren identisch ist, so unterscheiden sich dennoch die thermische Materialbehandlungen in den beiden Reaktoren hinsichtlich der in den beiden Reaktoren auftretenden Schwingungsfrequenzen und -amplituden erheblich. Diese beeinflussen dabei die jeweils vorliegenden Wärme- und Stoffübergangsraten von den schwingenden Heißgasströmungen auf die jeweils zu behandelnden Partikel und damit die erzielbaren Materialeigenschaften in den entstehenden Produkten.

Die genannten Unterschiede bei den jeweils auftretenden Schwingungsfrequenzen und -amplituden sind dem Umstand geschuldet, dass bei der kleineren Ausführung eine selbsterregte Verbrennungsinstabilität typischerweise bei höheren Schwingungsfrequenzen auftritt als bei einer baulich, d.h. geometrisch deutlich größeren Produktionsanlage.

Ein vergleichbares Phänomen tritt bei Orgelpfeifen auf, bei denen die Länge der Orgelpfeife über die anregbare, entstehende Grundfrequenz entscheidet: Eine große Länge korreliert mit einer niedrigen Frequenz des erzeugbaren Tons und eine kleine Länge korreliert mit einer hohen Frequenz des erzeugbaren Tons. Orgelpfeifen sind dabei je nachdem ob sie offen oder gedeckt sind Halb- oder Viertelwellenresonatoren.

Auch die Amplituden der Schwingungen der Heißgasströmungen in den beiden Reaktoren ändern sich insbesondere aufgrund der stark nichtlinear von der Reaktorgeometrie und der Schwingungsfrequenz abhängigen Schwingungsdämpfung des schwingenden Gesamtsystems.

Derzeit wird das beschriebene Problem der fehlenden Skalierbarkeit auf zeit- und kostenintensive Weise umgangen, indem sowohl Versuche für die Materialentwicklung als auch eine anschließend aufgenommene Produktion zum Erreichen jeweils identischer Materialeigenschaften der hergestellten Produkte immer mit Reaktoren derselben Größe und Bauform durchgeführt werden.

Somit sind durch diese bislang vorliegenden Begrenzungen hinsichtlich der Beibehaltung von Materialeigenschaften bei Größen- bzw. Durchsatzskalierungen von Schwingfeuerreaktoren für die thermische Materialbehandlung nach dem Stand der Technik die Entwicklungskosten neuer Produkte in dieser Technologie stark erhöht gegenüber anderen thermischen Verfahren, da sowohl bei Entwicklungs- oder Optimierungsversuchen als auch bei der Fertigung von Mustermengen zum Zwecke der physikalischchemischen Analyse von erreichten Materialeigenschaften bei neuen Produktentwicklungen einerseits unverhältnismäßig hohe Rohstoffmengen eingesetzt werden müssen und andererseits auch unnötig hohe Energie- und Personalkosten bei Versuchen an den Großausführungen dieser Reaktoren anfallen

Aufgabe der vorliegenden Erfindung ist es daher, eine Vorrichtung wie bisher beschrieben dahingehend weiterzubilden, dass sie im Wesentlichen von ihren geometrischen Abmessungen unabhängiger ist, um so freier zu werden bei der Erforschung und Erprobung von entsprechenden Verfahren zur thermischen Materialbehandlung oder thermischen Materialsynthese sowie ein entsprechendes Verfahren hierzu anzugeben.

Diese Aufgabe wird bezüglich der Vorrichtung erfindungsgemäß dadurch gelöst, dass stromaufwärts in der zur Flamme führenden Leitung eine extern antreibbare Pulsationseinrichtung für wenigstens einen Teil des zum Brenner geführten Massenstromes angeordnet ist.

Die Vorrichtung und das damit erfindungsgemäß durchgeführte Verfahren mit extern angetriebener Pulsationsamplitude und -frequenz für den Massenstrom haben den Vorteil, das mittels der extern antreibbaren Pulsationseinrichtung das zu dem Brenner strömende Brenngas/Luft-Gemisch im Falle einer Vormischverbrennung oder der Verbrennungsluft-Massenstrom im Falle einer Diffusionsverbrennung gesteuert zeitlich periodisch moduliert werden kann und ein Betreiber somit die Möglichkeit hat, die Frequenz und die Amplitude der besagten Massenstromschwankung einerseits unabhängig voneinander und andererseits auch unabhängig von allen anderen Prozessgrößen gezielt einstellen zu können.

Durch die antreibbare Pulsationseinrichtung wird die Flamme, die den für die thermische Behandlung notwendigen Heißgasstrom erzeugt, über die demgemäß periodisch schwingende Zufuhr entweder von Brennstoff/LuftGemisch oder aber von Verbrennungsluft zwangsangeregt. Sie schwingt damit genau mit der Frequenz und mit der Amplitude, die an der Pulsationseinrichtung eingestellt werden.

Der Erfindung liegt die Erkenntnis zugrunde, dass - wie man an der Verwendung der Bezeichnung "Resonanzrohr" erkennt - es einen wesentlichen und auch hartnäckigen Irrtum gibt bezüglich des Phänomens, das für die Erzeugung der schwingenden Heißgasströmung ursächlich ist:
Bei dem oben beschriebenen im Stand der Technik auftretenden Phänomen der selbsterregten Verbrennungsinstabilitäten handelt es sich um eine Systeminstabilität, bei der das System beim Erreichen einer anlagenspezifischen Stabilitätsgrenze von einem stationären, schwingungsfreien Betriebszustand mit stationärem Verbrennungsprozess schlagartig in einen periodisch-instationären, schwingenden Betriebszustand mit periodisch-instationärem Verbrennungsprozess umschlägt, ohne dass hierbei eine Fremderregung des Systems vorliegt.

Eigentlich bezeichnet der Begriff "Resonanz" ein hiervon physikalisch völlig verschiedenes Phänomen, nämlich das einer fremd- oder zwangserregten Schwingung: Ein schwingungsfähiges System wird durch eine äußere, periodische Anregung (z.B. periodische Krafteinwirkung durch periodische Unwucht, etc.) zum "Mitschwingen" also zum Resonieren angeregt.

Im Falle der im Stand der Technik beschriebenen Schwingfeuer-Reaktoren liegt also in Wirklichkeit überhaupt kein Resonanzphänomen im eigentlichen Sinne vor, da es keine periodische Anregungsquelle gibt, die die Gassäule z.B. im Resonanzrohr in periodische Schwingungen versetzt bzw. zur Resonanz anregt.

Vielmehr handelt es sich - wie bereits ausgeführt - um eine Systeminstabilität, die den gesamten Reaktor betrifft und für deren sich einstellende Schwingungsfrequenz das gekoppelte Schwingungsverhalten aller Anlagenkomponenten (Brenner - Brennkammer - Reaktionsraum ("Resonanzrohr") - Abscheideeinrichtungen (Filter, Zyklon) - etc.) verantwortlich ist /10/.

Die sich bei Reaktoren nach dem Stand der Technik bei selbsterregter Verbrennungsinstabilität einstellenden Schwingungsfrequenzen entsprechen also nicht der Resonanzfrequenz eines Bauteils wie z.B. des "Resonanzrohres", sondern sind vom gesamten System - und damit natürlich auch von der jeweiligen Ausführungsgröße des Reaktors - bestimmte Frequenzen, die anlagenspezifisch sehr unterschiedliche Werte aufweisen /10/.

Bei dem Gegenstand der Erfindung ändert die zeitlich modulierte Speisung der Flamme mit Brennstoff/Luft-Gemisch oder aber mit Verbrennungsluft gleichzeitig die Wärmefreisetzung der schwingenden Flamme, die ebenfalls periodisch und dabei gleichfrequent mit der Zwangsanregung der Flamme ist. Man erzielt also einen pulsierenden Heißgas-Massenstrom bei dem man in der Lage ist, Frequenz und Amplitude unabhängig voneinander einzustellen, ohne dass hierfür die geometrischen Abmessungen des Reaktors von Bedeutung wären. Wesentlich ist diesbezüglich, dass die Schwingungen bei den vorbekannten Reaktoren selbsterregt sind, während sie im erfindungsgemäßen Fall zwangserregt sind.

Eine besonders wirksame Einstellbarkeit von Frequenz und/oder Amplitude der Flamme lässt sich insbesondere bewirken durch eine entsprechende Beeinflussung insbesondere von Primärluft, die dem Brenner für die Flamme zugeführt wird, die den Heißgasstrom erzeugt, vorzugsweise des gesamten derartige Primärluft umfassenden Brennstoff/Luft-Gemisches. Eine aktive Pulsation von Sekundärluftströmen, wie sie früher beispielsweise bei Festbrennstofffeuerungen angewandt wurden, führen nicht zu den gewünschten unmittelbaren Änderungen von Amplituden und Frequenzen der Heißgasstömung bei einem wie hier im Vordergrund stehenden Materialbehandlungs-Reaktor.

Wesentlich ist auch, dass sich überraschender Weise herausgestellt hat, dass sich die Eigenschaften von Produkten einer thermischen Materialbehandlung oder -synthese als davon unabhängig erwiesen, ob sie mittels einer erfindungsgemäßen Vorrichtung mit einem zwangserregten schwingenden Heißgasstrom erzeugt wurden oder ob sie mittels einer pulsierenden, periodischen aber selbsterregten Heißgasströmung erzeugt wurden.

Bei einer besonders bevorzugten Ausführungsform der Erfindung ist außerdem die Brennkammer mit wenigstens einem Element zur Veränderung ihrer Geometrie versehen. Auch der Reaktionsraum kann mit einem entsprechenden Element zur Veränderung seiner Geometrie versehen sein, wobei entsprechende Elemente im Reaktionsraum sowohl alternativ als auch kumulativ mit solchen in der Brennkammer vorgesehen sein können. Des Weiteren sei hier der guten Ordnung halber darauf hingewiesen, dass Brennkammer und Reaktionsraum sowohl voneinander getrennt als auch unmittelbar ineinander übergehend ausgeführt sein können.

Die angesprochenen Elemente zur Geometrieveränderung können dabei relevant sein, weil die Resonanzfrequenzen des Brennraumes und/oder des Reaktionsraumes mit der zwangsangeregten Frequenz der Flamme getroffen werden können. Dies kann zu einer Anregung der in ihnen vorhandenen Heißgasschwingung führen. In einem solchen Resonanzfall findet eine starke resonanzbedingte Überhöhung der auftretenden Schwingungsamplituden statt. Um dies für alle mit der beschriebenen Pulsationseinrichtung prinzipiell erzeugbaren Frequenzen zu vermeiden, muss die Brennkammer und/oder der Reaktionsraum so stark schwingungsgedämpft werden, dass man eine überkritische Dämpfung vorliegen hat und somit auch bei Anregung mit der Resonanzfrequenz keine Resonanzüberhöhung der Schwingungsamplitude auftreten kann. Grundsätzlich wird eine derartige Ausgestaltung auch als "passive Brennkammer" bezeichnet.

Die Alternative hierzu sind die oben angesprochenen Veränderungselemente für die Geometrie der Brennkammer und/oder des Reaktionsraumes, da über diese die frequenzmäßige Lage der Resonanzüberhöhung(en) variabel einstellbar gestaltet werden können. Man hat somit die Möglichkeit, bei jeder zwangserregten Frequenz der Flamme die frequenzmäßige Lage des Resonanzbereiches der Brennkammer und/oder des Reaktionsraumes so zu verschieben bzw. so zu verstimmen, dass keine Resonanzanregung und somit keine unzulässige Amplitudenüberhöhung bei der jeweils gerade eingestellten Anregungsfrequenz der Flamme durch die Pulsationseinrichtung mehr auftreten kann.

Erfindungsgemäß ist es nun möglich, einen schwingenden Heißgas-Reaktor für die thermische Materialbehandlung auch in einer Kleinausführung oder als Laborreaktor zu bauen. In diesem erfindungsgemäßen Heißgasreaktor kann über die extern angetriebene Pulsationseinrichtung eine Flammenschwingung mit einstellbarer Amplitude und einstellbarer Frequenz zwangserregt werden. Beide können völlig unabhängig voneinander eingestellt werden

Somit ist es mit einer erfindungsgemäßen Vorrichtung möglich, die Bedingungen einer thermischen Materialbehandlung mit einer zwangserregten Flammen-/Heißgasschwingung zu simulieren, die identisch sind zu den entsprechenden Schwingungen, wie sie in einem Schwingfeuerreaktor auftreten, der durch selbsterregte Verbrennungsinstabilitäten angetrieben wird. Dies gilt für alle in Abhängigkeit von Baugröße und Bauform auftretenden Frequenzen und Amplituden.

Es sei noch einmal darauf hingewiesen, dass überraschenderweise die Materialeigenschaften eines in einem derartigen Klein- oder Laborreaktor erzeugten Produktes denen entsprechen, wie sie später in einer Massenproduktion mit einer Produktionsanlage mit wesentlich größeren Abmessungen erreicht werden.

Der Erfinder hat damit also eine Möglichkeit gefunden, die Abhängigkeit zu überwinden, die bisher vorhanden ist bei erzeugten Materialeigenschaften von den Abmessungen eines Schwingfeuerreaktors. Während bei den bisher bekannten Vorrichtungen sich Frequenz und Amplitude der schwingenden Heißgasströmung aufgrund selbsterregter Verbrennungsinstabilitäten in Abhängigkeit von der Baugröße und Bauform des individuellen Schwingfeuerreaktors selbsttätig einstellen, können nun im Rahmen von Materialentwicklungsversuchen oder Kleinproduktionen spezifische Behandlungsbedingungen in einem Laborreaktor wie oben beschrieben zielgenau eingestellt werden, und so das selbsterregte Schwingungsverhalten einer Großanlage in einer Laboranlage mit Zwangsanregung simuliert werden.

Die Erfindung gibt auch die Möglichkeit, dass wenn man von einen Schwingfeuerreaktor, in dem man die Produktion eines neuen Produktes durchführen will, eine sich aufgrund einer selbsterregten Verbrennungsschwingung selbsttätig erzeugende und einstellende Frequenz und Amplitude kennt, man gezielt Materialentwicklungen, Optimierungsversuche und Musterfertigung mit genau diesen vorbekannten Werten in einem Laborreaktor durchführen kann. So kann man gewährleisten, dass die sich dabei bezüglich der Materialeigenschaften des Produktes ergebenden Entwicklungsergebnisse auf die Produkte übertragbar sind, die bei einer Massenproduktion in der Großausführung erzielt werden.

Als eine Pulsationsvorrichtung, die in der zu dem Brenner führenden Leitung angeordnet ist, kann beispielsweise ein Zylinder/Kolben-Aggregat vorgesehen sein. Der Kolben wird über einen insbesondere externen Antrieb vor- und zurückbewegt, so dass mit ihm in den Zylinderraum Brennstoff/Luft-Gemisch oder aber Verbrennungsluft eingesaugt und wieder ausgestoßen wird, so dass am Brenner, der dem Zylinder/KolbenAggregat strömungstechnisch nachgeschaltet ist, die gewünschte Pulsation auftritt, die im Wesentlichen sinusförmig ist.

Außer der Frequenz mit der der Kolben hin- und her bewegt wird, kann mit diesem Aggregat auch über den vom Kolben zurückgelegten Hub, der hierfür verstellbar ausgeführt sein kann, die Amplitude bedarfsweise angepasst werden.

Eine vergleichbare Ausführungsform weist in einem mit der zu dem Brenner führenden Leitung in Verbindung stehenden Raum eine Membran auf, die zum Teil die Wandung dieses Raumes bildet und die von extern zu Schwingungen anregbar ist. Durch die schwingende Bewegung dieser Membran verringert und vergrößert sich das Volumen des Raumes kontinuierlich und durch diese Volumenänderung kann der von der Leitung an den Brenner abgegebenen Massenstrom in eine im Wesentlichen sinusförmige Pulsation gebracht werden.

Eine weitere Möglichkeit, um eine pulsierende Strömung zu dem Brenner zu erzeugen, ist die Verwendung von schnellschließenden Ventilen stromauf vom Brenner.

Bei einer besonders bevorzugten Ausführungsform wird in der zum Brenner führenden Leitung eine Pulsationseinrichtung vorgesehen, die ein zylindrisches Gehäuse aufweist, in dessen Umfangsfläche sich eine Öffnung mit sinusförmig verlaufendem Rand und eine rechteckförmige Fläche befinden. Durch diese Öffnung tritt der Massenstrom an Brenngas/LuftGemisch oder Verbrennungsluft aus dem Innern des Gehäuses in eine daran angeschlossene Leitung, die zum Brenner führt.

Die Öffnung mit sinusförmigem Rand wird durch einen im Innern der Pulsationseinrichtung angeordneten insbesondere mehrflügeligen Drehschieber periodisch für aus dem Gehäuse ausströmenden Massenstrom verschlossen. Der Drehschieber wird dabei durch einen Motor mit einstellbarer Drehzahl angetrieben.

Durch dieses periodische Verschließen der Öffnung mit sinusförmigem Rand aus dem Gehäuse der Pulsationseinrichtung wird der durch sie hindurchtretende Gasmassenstrom (Brenngas/Luft-Gemisch oder nur Verbrennungsluft) periodisch und somit zeitlich sinusförmig moduliert. Über die Drehzahl des antreibenden Motors und die Anzahl der Flügel des rotierenden Drehschiebers erfolgt eine Einstellung der Frequenz der Massenstrommodulation. Diese Frequenz liegt typischerweise in einem Frequenzbereich zwischen 1 Hz und 500 Hz.

Über eine zusätzliche Versperrung der rechteckförmigen Öffnung aus dem Gehäuse der Pulsationseinrichtung mit einem statischen, sich nicht drehenden zweiten Schieber kann ein stets in Richtung Brenner austretender Bypass-Massenstrom zielgenau eingestellt und somit die Pulsationsamplitude der erzwungenen Massenstromschwankung festgelegt werden.

Im Grenzfall, wenn die rechteckförmige Öffnung vollständig verschlossen ist und der rotierende Drehschieber gerade die Öffnung mit sinusförmigem Rand momentan ebenfalls vollständig verschließt, ist der aus der Pulsationseinrichtung austretende Massenstrom, der zum Brenner strömt, nahezu null.

Öffnet der Drehschieber die Öffnung mit sinusförmigem Rand dann wieder zunehmend, steigt der aus der Pulsationseinrichtung ausströmende und in den Brenner einströmende Gemisch- oder Luftmassenstrom stetig an, bis er bei völlig geöffneter Öffnung mit sinusförmigem Rand sein Maximum erreicht, um danach bei wieder zunehmendem Verschluss der Öffnung mit sinusförmigem Rand wieder abzunehmen.

Mit einer solchen Pulsationsvorrichtung, die nur ein Ausführungsbeispiel darstellt, wird die Flamme über die periodisch schwingende Zufuhr an frischem Brennstoff/Luft-Gemisch oder an Verbrennungsluft zwangsangeregt und zwar mit genau der Frequenz und Amplitude, die an der Pulsationseinrichtung eingestellt werden.

Durch die zeitlich modulierte Speisung der Flamme mit Brennstoff/LuftGemisch ändert sich in der Flamme ebenfalls periodisch und gleichfrequent mit der Zwangsanregung die momentane Wärmefreisetzung der schwingenden Flamme sowie der daraus anfallende, momentane Heißgasmassenstrom, der aus dem Verbrennungsprozess in der Flamme resultiert. Man erzeugt also auf diese Weise einen pulsierenden Heißgas-Massenstrom mit unabhängig voneinander einstellbarer Frequenz und Amplitude, in welchem die gewünschte thermische Materialbehandlung des Rohstoffes durchgeführt werden kann, ohne dass hierfür die Abmessungen des Reaktors von Bedeutung wären.

Weitere Vorteile und Merkmale der Erfindung ergeben sich aus der nachfolgenden Beschreibung von Ausführungsbeispielen. Dabei zeigt:
Fig. 1 Prinzipskizze einer Vorrichtung zur thermischen Behandlung eines Rohstoffes in einem schwingenden Heißgasstrom
Fig. 2 Vorrichtung zur Erzeugung eines schwingenden Massenstromes in der Außenansicht
Fig. 3 Vorrichtung gemäß Fig. 2 in einer Schnittansicht.

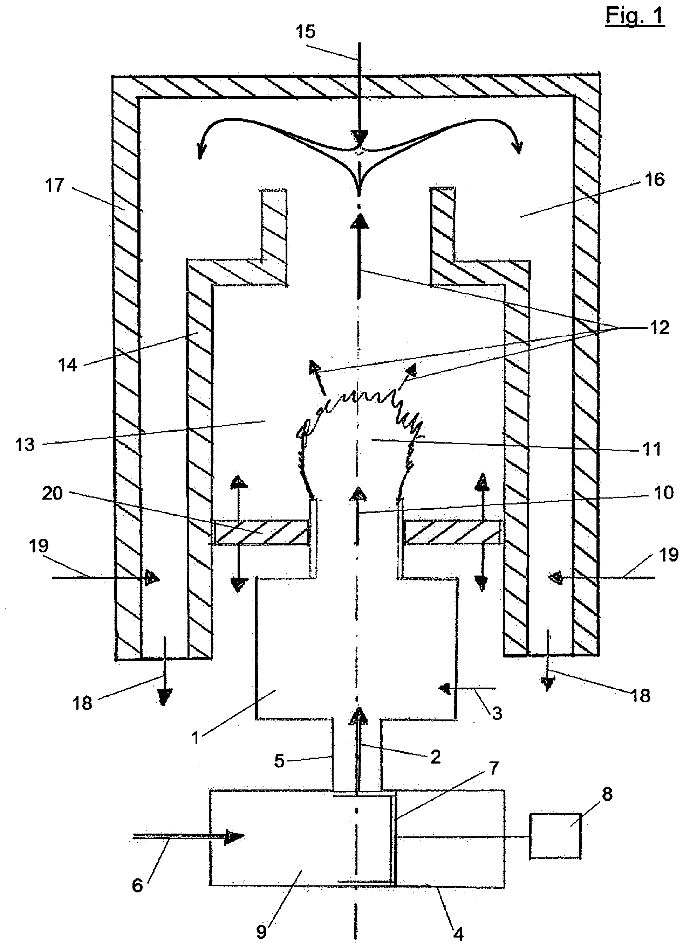

In der Fig. 1 erkennt man eine Vorrichtung zur thermischen Behandlung eines Rohstoffes in einem schwingenden Heißgasstrom in der Schnittansicht als Prinzipdarstellung.

Einem Brenner 1 wird ein pulsierender Massenstrom 2 zugeführt. Bei diesem Massenstrom handelt es sich entweder um Verbrennungsluft, wenn der Brenner 1 ein Diffusionsbrenner ist oder aber um ein Brennstoff/LuftGemisch, wenn es sich bei dem Brenner 1 um einen Vormischbrenner handelt, was bevorzugt ist. Sollte es sich bei dem pulsierenden Massenstrom 2 ausschließlich um Verbrennungsluft für einen Diffusionsbrenner handeln, wird dem Brenner 1 separat noch Brennstoff 3 zugeführt.

Ein Diffusionsbrenner hat dabei gegenüber einem Vormischbrenner das Problem, dass die pulsierende Verbrennungsluft teilweise zu Sauerstoffmangel führen kann, woraus unerwünschte Verbrennungswerte z.B. Ruß in mit dem Brenner zu erzeugende Heißgasstrom erzeugt werden. Derartige Verbrennungsreste führen zu einer Verschmutzung des zu behandelnden oder zu synthetisierenden Materials. Daher kann statt Brennstoff 3 hier bei einem Vormischbrenner weiteres Brennstoff/Luft-Gemisch zugesetzt werden. Der am Austritt des Brenners in einer dort erzeugten Flamme eintretende Massenstrom pulsiert dann insgesamt, wobei er sich quasi aus einem gleichmäßig strömenden Grundstrom und einem zur Pulsation angeregten Massenstrom zusammensetzt.

Der pulsierende Massenstrom 2 stammt aus einer Pulsationseinrichtung 4, die stromauf vom Brenner 1 in die Leitung 5 integriert ist, mit der dem Brenner 1 der pulsierende Massenstrom 2 zugeführt wird.

Der Pulsationseinrichtung 4 wird ein kontinuierlicher Massenstrom 6 zugeführt, der über die Pulsationseinrichtung 4 in den pulsierenden Massenstrom 2 umgewandelt wird.

Die Pulsationseinrichtung 4 kann einen Kolben 7 aufweisen, der mittels eines Motors 8 hin- und herbewegt wird, sodass hierdurch dem kontinuierlichen Massenstrom 6 die Pulsation aufgezwungen wird, die ihn zum pulsierenden Massenstrom 2 wandelt.

Statt eines Kolbens 7 kann auch eine Membran bewegt werden, die eine Wandung des von dem Massenstrom durchströmten Raumes 9 bildet. Auch auf diese Weise kann die Pulsation des Massenstromes 2 erzeugt werden.

Am Ende des Brenners 1 strömt das pulsierende Brennstoff/Luft-Gemisch 10 in eine Flamme 11, die demgemäß angeregt pulsiert und damit einen pulsierenden Heißgasstrom 12 erzeugt. Die pulsierende Flamme 11 brennt dabei in einem Brennraum 13, der eine ggf. doppelwandige, wassergekühlte Wandung 14 hat.

Dem pulsierenden Heißgasstrom 12, der den Brennraum 13 verlässt, wird Rohstoff 15 zugesetzt, mit dem er durch einen Reaktorraum 16 geleitet wird, der sich strömungstechnisch an den Brennraum 13 anschließt. Der Reaktorraum ist bedarfsweise auch mit einer doppelwandigen, luft- oder wassergekühlten Wandung 17 versehen.

Im Reaktorraum 16 wird der in den pulsierenden Heißgasstrom 12 zugeführte Rohstoff 15 entsprechend behandelt, wobei je nach Zusammensetzung des Rohstoffes bzw. Rohstoffgemisches hier auch eine Materialsynthese stattfinden kann.

Am Ende des Reaktorraumes 16 wird das fertige Produkt aus dem Reaktorraum 16 ausgetragen, wobei die Möglichkeit besteht, hier der Heißgasströmung bedarfsweise noch Kühlluft 19 zuzusetzen, um das erzeugte Produkt 10 zu quenchen.

Das aus dem Reaktorraum 16 ausgetragene Produkt wird anschließend über einen nicht dargestellten Heißgasfilter oder ein Zyklon von dem es tragenden Heißgas separiert.

Es hat sich dabei herausgestellt, dass die Abmessungen der hier gezeigten Vorrichtung für das fertige Produkt letztlich irrelevant sind, so lange die Frequenz und die Amplitude des pulsierenden Heißgasstromes 12 festgelegt sind. Diese Festlegung kann über die Pulsationseinrichtung 4 bewirkt werden, die dem pulsierenden Massenstrom 2 seine Frequenz und Amplitude aufprägt.

Um zu verhindern, dass in dem Brennraum 13 und in dem diesem strömungstechnisch nachgeschalteten Reaktorraum 16 keine unerwünschten Resonanzen auftreten, die zu einer im vorliegenden Fall unerwünschten Überhöhung der erzeugten Amplituden führen könnten, ist die Vorrichtung mit einem Veränderungselement 20 für die Geometrie der Brennkammer bzw. des Reaktionsraumes ausgestattet. Dieses Veränderungselement ist im hier dargestellten Beispiel durch einen verschiebbaren Boden 20 der Brennkammer 13 gebildet. Mit diesem Veränderungselement 20 kann die Resonanzfrequenz der hier dargestellten Vorrichtung so verändert werden, dass sie nicht mehr zu einer unerwünschten resonanzbedingten Überhöhung der Amplituden führen kann, die mit der pulsierenden Flamme 11 erzeugt werden.

Es sei an dieser Stelle darauf hingewiesen, dass die hier dargestellte Brennkammer und der ihr nachgeschaltete Resonanzraum im Prinzip wie ein Helmholtz-Resonator konstruiert sind, also nicht wie orgelpfeifenähnliche Halb- oder Viertelwellenresonatoren, wie sie oben beschrieben wurden. Damit kann bei üblichen Abmessungen einer solchen als Laborreaktor verwendbaren Vorrichtung je nach Position des Veränderungselementes und daraus resultierenden Volumen z.B. der Brennkammer als Helmholtzresonator und der eingestellten Temperatur des Heißgas-Massenstromes sie eine als Betriebsfrequenz zu vermeidende Resonanzfrequenz von etwa 40 bis 160 Hz haben.

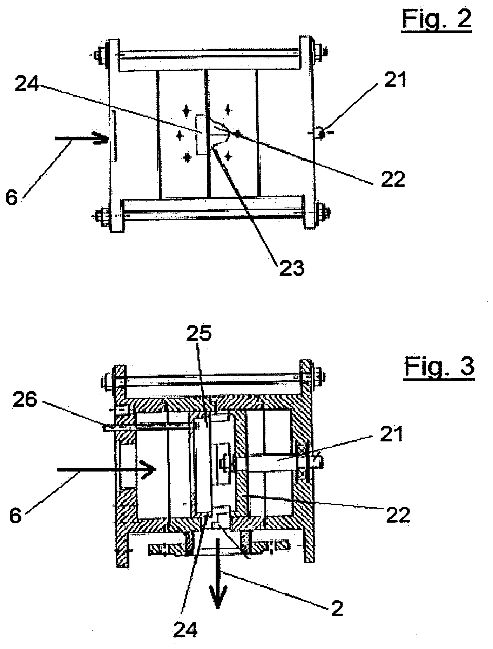

Bezüglich der Pulsationserzeugung ist in den Fig. 2 und 3 eine geeignete Pulsationseinrichtung detaillierter dargestellt: Über eine Motorwelle 21 kann ein mehrflügeliger Drehschieber 22 in Rotation gesetzt werden, der dabei eine Öffnung 23 mit sinusförmiger Fläche öffnet und schließt. Durch diese Öffnung 23 wird der kontinuierlich in die Pulsationseinrichtung fließende Massenstrom 6 in einen pulsierenden Massenstrom 2 umgewandelt, wobei die Pulsation aufgrund der von dem Massenstrom durchströmten Öffnung 23 mit sinusförmiger Fläche eine im wesentlichen sinusförmigen Verlauf aufweist. Über die mittels der Antriebswelle 21 auf den Drehschieber 22 aufgebrachte Drehzahl und über die Anzahl an Flügeln, die der Drehschieber 22 hat, kann dabei die eingestellte Frequenz des Massenstromes bestimmt bzw. geregelt werden. Üblich ist hier eine Frequenz zwischen einem 1 Hz und 500 Hz.

Es ist auch möglich, die Öffnung 23 mit einem Abschnitt von rechteckiger Form 24 zu ergänzen. Durch diesen Abschnitt kann mittels eines zweiten Schiebers 25, der diesen rechteckigen Abschnitt zu bedarfsweise verschließen kann, eine gleichmäßige Grundströmung für den Massenstrom bewirkt werden, die bezüglich des pulsierenden Massenstromes eine Bypassströmung bewirkt.

Der zweite Schieber 25 kann über einen Stellstift 26 entsprechend justiert werden.

### Bezugszeichenliste

- 1: Brenner
- 2: pulsierender Massenstrom
- 3: Brennstoff
- 4: Pulsationsvorrichtung
- 5: Leitung
- 6: kontinuierlicher Massenstrom
- 7: Kolben
- 8: Motor
- 9: vom Massenstrom durchströmter Raum
- 10: pulsierendes Brennstoff/Luft-Gemisch
- 11: Flamme
- 12: pulsierender Heißgasstrom
- 13: Brennraum
- 14: Wandung
- 15: Rohstoff
- 16: Reaktorraum
- 17: Wandung
- 18: Produkt
- 19: Kühlluft
- 20: Veränderungselement
- 21: Antriebswelle
- 22: Drehschieber
- 23: Öffnung
- 24: rechteckiger Abschnitt
- 25: zweiter Schieber
- 26: Stellstift

### Literatur

/1/ A.A. Putnam and W.R. Dennis: "Organ Pipe Oscillations in Flamefilled tubes"; Proc. Comb. Inst. 4, S. 556 ff., 1952
/2/ H. Büchner: "Experimentelle und theoretische Untersuchungen der Entstehungsmechanismen selbsterregter Druckschwingungen in technischen Vormisch-Verbrennungssystemen"; Dissertation Universität Karlsruhe, Shaker-Verlag Aachen, 1992
/3/ DD 114 454 B1
/4/ DD 155 161 B1
/5/ DD 245 648 A1
/6/ DE 10 2006 046 803 A1
/7/ DE 101 09 892 B4
/8/ DE 10 2006 046 880 B4
/9/ DE 10 2006 032 452 B4
/10/ Chr. Bender: "Messung und Berechnung des Resonanzverhaltensgekoppelter Helmholtz-Resonatoren in technischen Verbrennungssystemen"; Dissertation Universität Karlsruhe KIT, 2010

## Patentansprüche

1. Vorrichtung zur thermischen Behandlung eines Rohstoffes in einem schwingenden Heißgasstrom (12) eines Schwingfeuerreaktors, mit einem Brenner (1), der über wenigstens eine Leitung (5) ein Massenstrom (10) zur Bildung wenigstens einer Flamme (11) zugeführt wird, die den schwingenden Heißgasstrom (12) erzeugt, wobei die Flamme (11) in einer Brennkammer (13) angeordnet ist und wobei sich ein Reaktionsraum (16) stromab an die Brennkammer (13) anschließt, **dadurch gekennzeichnet,**
**dass** stromaufwärts in der zur Flamme (11) führenden Leitung (5) eine extern antreibbare Pulsationseinrichtung (4) für wenigstens einen Teil des zum Brenner geführten Massenstromes (2) angeordnet ist.

2. Vorrichtung gemäß Anspruch 1,
**dadurch gekennzeichnet,**
**dass** die Brennkammer (13) mit wenigstens einem Element (20) zur Veränderung ihrer Geometrie versehen ist.

3. Vorrichtung gemäß einem oder mehreren der vorhergehenden Ansprüche,
**dadurch gekennzeichnet,**
**dass** der Reaktionsraum (16) mit wenigstens einem Element zur Veränderung seiner Geometrie versehen ist.

4. Vorrichtung gemäß einem oder mehreren der vorhergehenden Ansprüche,
**dadurch gekennzeichnet,**
**dass** die Pulsationseinrichtung (4) ein Zylinder/Kolben-Aggregat ist.

5. Vorrichtung gemäß einem oder mehreren der vorhergehenden Ansprüche,
**dadurch gekennzeichnet,**
**dass** die Pulsationseinrichtung (4) eine in der zu dem Brenner (1) führenden Leitung angeordnete Membran ist, die eine Wandung bildet und die von extern zu Schwingungen anregbar ist.

6. Vorrichtung gemäß einem oder mehreren der vorhergehenden Ansprüche,
**dadurch gekennzeichnet,**
**dass** die Pulsationseinrichtung (4) ein zylindrisches Gehäuse aufweist, auf dessen Umfangsfläche sich wenigstens eine Öffnung (23) mit wenigstens einem sinusförmigem Rand befindet, durch die der zur Flamme (11) strömende Massenstrom (2) hindurchströmt und die steuerbar schließ- und öffenbar ist.

7. Vorrichtung gemäß einem oder mehreren der vorhergehenden Ansprüche,
**dadurch gekennzeichnet,**
**dass** die Pulsationseinrichtung (4) mit einer Bypass-Massenstromöffnung (24) versehen ist.

8. Verfahren zur thermischen Behandlung eines Rohstoffes in einem schwingenden Heißgasstrom eines Schwingfeuerreaktors, mit einem Brenner, dem über wenigstens eine Leitung ein Massenstrom aus Brenngas und Luft zur Bildung wenigstens einer Flamme zugeführt wird, die den Heißgasstrom erzeugt, wobei die Flamme in einer Brennkammer angeordnet ist, an den sich ein Reaktionsraum anschließt, **dadurch gekennzeichnet,**
**dass** der zum Brenner geführte Massenstrom mit einer extern bestimmten Frequenz und Amplitude mit einer Pulsation versehen wird.

9. Vorrichtung gemäß Anspruch 1,
**dadurch gekennzeichnet,**
**dass** der Massenstrom (2) Brenngas/Luft-Gemisch umfasst, die dem Brenner (1) für die Flamme (11) zugeführt wird.

10. Verfahren gemäß einem oder mehreren der Ansprüche 8 oder 9,
**dadurch gekennzeichnet,**
**dass** die Geometrie der Brennkammer und/oder des Reaktionsraumes zur Veränderung einer Resonanzfrequenz verstellbar ist.
